Europäisches Patentamt

European Patent Office

Office européen des brevets

(19)

(11) **EP 1 120 019 B1**

(12) **FASCICULE DE BREVET EUROPEEN**

(45) Date de publication et mention
de la délivrance du brevet:
**07.08.2002 Bulletin 2002/32**

(51) Int Cl.⁷: **H05B 39/02**, H02H 9/00,
H02M 5/257

(21) Numéro de dépôt: **99969889.7**

(22) Date de dépôt: **29.09.1999**

(86) Numéro de dépôt international:
**PCT/FR99/02317**

(87) Numéro de publication internationale:
**WO 00/19778 (06.04.2000 Gazette 2000/14)**

(54) **CIRCUIT DE COMMANDE D'UNE CHARGE A ALIMENTER PAR UNE TENSION ALTERNATIVE**

STEUERSCHALTUNG FÜR EINE WECHSELSPANNUNGSGESPEISTE LAST

CIRCUIT FOR CONTROLLING A LOAD TO BE SUPPLIED BY AN ALTERNATING CURRENT VOLTAGE

(84) Etats contractants désignés:
**DE FR GB IT**

(30) Priorité: **29.09.1998 FR 9812395**

(43) Date de publication de la demande:
**01.08.2001 Bulletin 2001/31**

(73) Titulaire: **STMicroelectronics S.A.**
**92120 Montrouge (FR)**

(72) Inventeurs:
• **RIVET, Bertrand**
**F-37540 Saint Cyr Sur Loire (FR)**

• **PEZZANI, Robert**
**37210 Vouvray (FR)**

(74) Mandataire: **de Beaumont, Michel**
**1bis, rue Champollion**
**38000 Grenoble (FR)**

(56) Documents cités:
**FR-A- 2 249 477    US-A- 4 107 584**
**US-A- 4 680 536**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un circuit de commande d'une charge destinée à être alimentée par une tension alternative. L'invention s'applique plus particulièrement à l'alimentation d'une charge destinée à être raccordée directement sur un réseau de fourniture d'une alimentation alternative haute tension, par exemple, le secteur (par exemple, 220 ou 110 volts).

Lorsqu'une charge doit être alimentée par le réseau électrique alternatif, il se pose très souvent un problème de sur-courant à la mise sous tension. Le problème est particulièrement présent dans le cas d'une charge présentant, à l'allumage, une impédance faible devant son impédance en régime établi. C'est le cas, par exemple, d'une lampe de type à filament, où le filament est froid lors de l'allumage, ou d'un moteur qui ne présente pas de force électromotrice au démarrage.

Un premier inconvénient d'un démarrage dit "à froid" sur une charge présentant une faible impédance par rapport à son impédance nominale est que cela réduit la durée de vie de la charge. Pour une lampe, cela crée un choc thermique au niveau du filament qui limite la durée de vie de celui-ci. On peut d'ailleurs noter qu'une ampoule "claque" le plus souvent à l'allumage. Pour un moteur, le sur-courant au démarrage par rapport au courant nominal nuit à la durée de vie des balais.

Un autre inconvénient d'un démarrage à froid non protégé pour des charges de ce type est que cela provoque souvent un phénomène de scintillement ou papillotement (flicker) des autres charges éventuellement connectées sur la même ligne électrique. Ce phénomène est dû aux pics de courants d'appel, répétés à chaque alternance de la tension alternative (fréquence de 50 ou 60 Hz) tant que l'impédance de la charge n'a pas atteint une valeur suffisante. On voit un tel phénomène apparaître, en particulier, sur des lampes déjà allumées, lors d'un démarrage d'un moteur d'un appareil électroménager raccordé sur le même circuit électrique.

Le plus souvent, dans les applications où on utilise de telles charges à faible impédance au démarrage, la première raison pour laquelle on cherche à associer la charge à un circuit de commande est un besoin de régler la puissance de la charge. Par exemple, il peut s'agir d'un réglage de l'intensité lumineuse pour une lampe à incandescence ou d'un réglage de la vitesse de rotation d'un moteur.

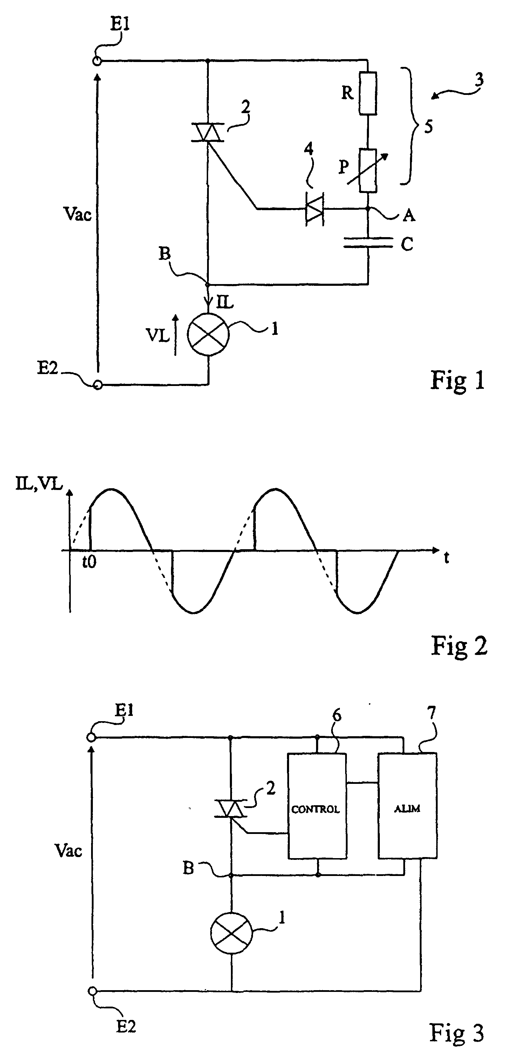

La figure 1 représente un premier exemple classique d'un variateur de puissance d'une charge 1 à alimenter en alternatif. Le circuit de la figure 1 constitue actuellement, pour une commande en variation de puissance, un des meilleurs compromis performances/coût.

La charge 1 est connectée, en série avec un interrupteur bidirectionnel, le plus souvent un triac 2, entre deux bornes E1, E2 d'application d'une tension alternative d'alimentation Vac. La commande du triac 2 est généralement assurée en angle de phase au moyen d'un circuit 3 connecté en parallèle sur le triac 2, c'est-à-dire entre la borne E1 et le point-milieu B de l'association en série du triac avec la charge.

Le circuit 3 est constitué d'un diac 4, connecté entre la gâchette du triac 2 et le point milieu A d'une association en série d'un élément résistif variable 5 avec un condensateur C. L'association en série de l'élément 5 et du condensateur C est connectée en parallèle sur le triac 2. L'élément résistif variable 5 est, par exemple, constitué d'une résistance R connectée en série avec un potentiomètre P.

Le fonctionnement d'un circuit de commande illustré par la figure 1 est parfaitement connu. Ce fonctionnement est brièvement rappelé ci-dessous en relation avec la figure 2 qui représente un exemple de chronogramme de la tension $V_L$ aux bornes de la charge 1 en régime établi. On notera que, si la charge 1 est purement résistive, l'allure de la tension $V_L$ correspond, en régime établi, également à l'allure du courant $I_L$ dans la charge.

Au début de chaque alternance de la tension d'alimentation vac, le triac 2 est bloqué et la tension $V_L$ aux bornes de la charge 1 est nulle. On suppose que la résistance R est de très forte valeur de sorte que l'impédance de la charge 1 est négligeable devant cette valeur. Au fur et à mesure que l'amplitude de la tension alternative croît, le condensateur C se charge à travers la résistance R et le potentiomètre P. Quand la tension $V_{AB}$ aux bornes du condensateur C atteint la tension seuil du diac 4, celui-ci entre en conduction et un courant circule alors dans la gâchette du triac 2. A cet instant (t0, figure 2), le triac s'amorce et la tension aux bornes de la charge 1 devient la tension Vac en négligeant la chute de tension dans le triac 2. A la fin de chaque alternance, le triac 2 se bloque par disparition du courant qui le traverse, et le fonctionnement décrit ci-dessus se reproduit aux alternances suivantes.

La variation de puissance par angle de phase est obtenue en faisant varier la valeur de la résistance de l'élément 5 par une variation du potentiomètre P. En effet, plus la valeur du potentiomètre P est importante, plus le condensateur C va être long à présenter à ses bornes une tension suffisante pour déclencher le diac 4, et plus l'instant t0 est tardif par rapport au début de l'alternance.

En régime établi, c'est-à-dire une fois que la charge 1 a atteint son impédance nominale, le circuit tel que représenté à la figure 1 fonctionne correctement en variation de puissance.

Toutefois, en régime transitoire, c'est-à-dire soit à l'allumage soit en cas d'augmentation de la puissance de la charge par diminution de la résistance du potentiomètre P, un tel circuit présente l'inconvénient d'entraîner de forts pics de courant dans la charge. En effet, lorsque le triac 2 entre en conduction, la charge voit alors la tension du réseau, qui plus est sous une forte amplitude en raison de la modulation d'angle de phase opérée pour la variation de puissance du régime établi. Si la charge a une impédance très faible, c'est alors presque un court-circuit sur le secteur.

Le document US-A-4680536 décrit un circuit de commande du type auquel se rapporte l'invention et basé sur le schéma de la figure 1. Par rapport au schéma de la figure 1, le circuit de ce document comprend un pont redresseur dont les bornes d'entrée sont connectées entre la borne commune de la résistance et du potentiomètre et la borne commune du triac et de la charge. Le pont comprend dans sa diagonale, une deuxième résistance, un deuxième condensateur et une diode Zener. Un tel circuit a pour but de limiter les pics de courant dans la charge à l'allumage.

Un inconvénient de ce circuit est qu'il nécessite un composant de limitation de tension (diode Zener) pour limiter la tension de la diagonale du pont (aux bornes du deuxième condensateur), faute de quoi cette tension pourrait atteindre la valeur crête de la tension alternative. Un autre inconvénient est que le deuxième condensateur voit quand même une tension relativement élevée (supérieure à la tension de retournement du diac, de sorte que le circuit nécessite deux condensateurs devant supporter une tension supérieure à la tension de retournement du diac.

Un autre inconvénient commun au circuit de la figure 1 et au circuit du document US-A-4680536 est que le potentiomètre P doit être un potentiomètre haute tension, ce qui est relativement onéreux.

La figure 3 représente un deuxième exemple classique de circuit de commande d'un triac 2 connecté en série avec une charge 1 à alimenter au moyen d'une tension alternative Vac. Le circuit de la figure 3 vise non seulement à permettre une variation de puissance de la charge 1 en régime établi mais également à limiter le courant d'appel au démarrage, c'est-à-dire tant que l'impédance de la charge est faible devant son impédance en régime établi. Un tel circuit nécessite un bloc 6 de commande du triac proprement dit et un bloc 7 d'alimentation. En effet, le bloc 6 est généralement réalisé sous la forme d'un circuit intégré et nécessite donc d'être alimenté par une tension régulée fournie par le bloc 7. Le bloc 6 est connecté en parallèle avec le triac 2, donc relié entre les bornes E1 et B du montage. Le bloc 7 est connecté aux bornes E1 et E2 d'alimentation et doit comporter une liaison de référence au noeud B. Une sortie du bloc 6 est connectée à la gâchette du triac 2 pour en assurer la commande tandis qu'une sortie du bloc 7 7 délivre une tension continue régulée au bloc 6.

Un montage tel qu'illustré par la figure 3 permet d'obtenir des résultats satisfaisants, à la fois pour la variation de puissance et pour la limitation de l'appel de courant en régime transitoire.

Toutefois, il présente l'inconvénient d'être de constitution particulièrement complexe et d'un coût élevé.

La présente invention vise à proposer une nouvelle solution pour résoudre le problème du courant d'appel au démarrage de charges devant être alimentées par une tension alternative en palliant au moins un inconvénient des solutions connues.

L'invention vise, en particulier, à proposer une solution qui permette, non seulement, une variation de la puissance de la charge en régime établi, mais également, une limitation du courant d'appel alors que la charge présente une faible impédance en régime transitoire.

La présente invention vise également à proposer une solution qui soit particulièrement simple à mettre en oeuvre et qui soit peu onéreuse par rapport aux solutions classiques à circuit intégré.

L'invention vise également à minimiser le nombre de composants nécessaires à la réalisation du circuit et, en particulier, à éviter le recours à des composants de limitation de tension comme dans le document US-A-4680536 cité précédemment.

L'invention vise en outre à éviter le recours à deux condensateurs devant supporter une tension supérieure à la tension de retournement d'un élément à conduction bidirectionnelle (diac) utilisé pour commander un interrupteur bidirectionnel (triac) commandé par angle de phase.

Pour atteindre ces objets, la présente invention prévoit un circuit de commande d'une charge propre à être alimentée en alternatif, du type comprenant un interrupteur bidirectionnel et commandable par angle de phase, en série avec la charge entre deux bornes d'application de l'alimentation alternative, et comportant, en parallèle avec l'interrupteur, un premier élément résistif, un premier condensateur et un élément, en série avec ledit premier élément résistif et ledit premier condensateur, et fonctionnant, en régime établi, comme une source de tension constante, le point milieu de l'association en série du premier élément résistif et du premier condensateur étant connecté, par l'intermédiaire d'un élément à conduction bidirectionnelle déclenchée automatiquement quand la tension à ses bornes excède un seuil prédéterminé, à une borne de commande de l'interrupteur.

Selon un mode de réalisation de la présente invention, l'élément en série avec le premier élément résistif et le premier condensateur est constitué d'un pont de redressement dans la diagonale duquel sont associés, en parallèle, un deuxième condensateur et un deuxième élément résistif.

Selon un mode de réalisation de la présente invention, la valeur du deuxième condensateur est grande devant la valeur du premier condensateur.

Selon un mode de réalisation de la présente invention, le premier élément résistif est une résistance fixe, le deuxième élément résistif étant une résistance variable.

Selon un mode de réalisation de la présente invention, le premier élément résistif est une résistance variable, le deuxième élément résistif étant une résistance fixe.

Selon un mode de réalisation de la présente invention, l'interrupteur bidirectionnel est un triac.

Selon un mode de réalisation de la présente invention, l'élément à conduction bidirectionnelle déclenchée automatiquement est un diac.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 à 3 qui ont été décrites précédemment sont destinées à exposer l'état de la technique et le problème posé ;
la figure 4 représente un mode de réalisation préféré d'un circuit de commande d'une charge devant être alimentée par une tension alternative selon la présente invention ;
la figure 5 est un schéma équivalent simplifié du circuit de la figure 4 en régime établi ; et
la figure 6 illustre, sous forme de chronogrammes, l'allure de différents tensions et courant caractéristiques du circuit de l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, la charge devant être commandée par le circuit de l'invention a été représentée de façon générique et ne sera pas détaillée selon qu'il s'agit d'une lampe, d'un moteur, ou autres.

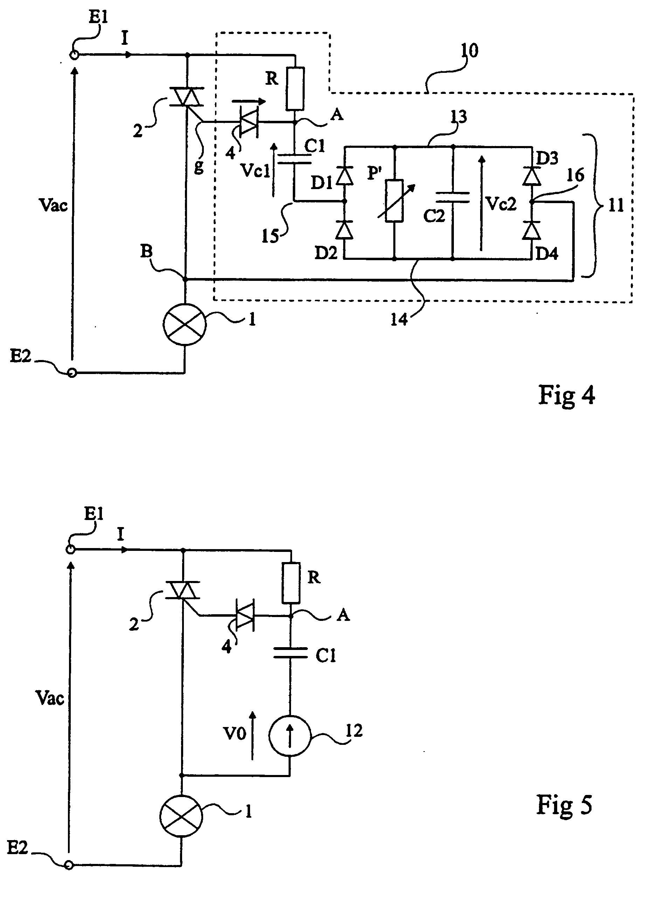

La figure 4 représente un mode de réalisation d'un circuit de commande d'une charge 1 destinée à être alimentée par une tension alternative Vac selon la présente invention.

Comme précédemment, la charge 1 est connectée en série avec un triac 2, ou tout interrupteur bidirectionnel analogue, entre deux bornes E1, E2 d'application de la tension Vac.

Le triac 2 est commandé par un circuit 10 selon l'invention qui, comme précédemment, est connecté en parallèle avec le triac 2, c'est-à-dire entre la borne E1 et le noeud B constituant le point milieu de l'association en série de la charge 1 avec le triac 2. Le circuit 10 comporte une sortie reliée à la gâchette g du triac 2.

Le circuit 10 de l'invention est propre à commander le triac 2 par angle de phase comme un circuit classique tel que représenté à la figure 1. Ainsi, selon un mode de réalisation préféré de la présente invention, la gâchette g du triac 2 (ou la borne de commande d'un composant analogue) est reliée à une première borne d'un diac 4 (ou tout autre composant à conduction bidirectionnelle déclenchée automatiquement quand la tension à ses bornes excède un seuil prédéterminé), dont une deuxième borne A est connectée au point milieu d'une association en série d'un élément résistif R avec un élément capacitif 11.

Une caractéristique du mode de réalisation de la figure 4 est que l'élément résistif R est constitué d'une résistance fixe de forte valeur.

Une autre caractéristique de ce mode de réalisation est que l'élément capacitif 11, connecté entre les noeuds A et B, est rendu variable. Ainsi, fonctionnellement, on prévoit de faire varier, non plus la résistance comme dans un circuit classique tel que représenté à la figure 1, mais l'élément capacitif, pour fixer la puissance d'alimentation de la charge en régime établi.

On notera dès à présent un premier avantage de la présente invention qui est que le seul composant capacitif ou résistif haute tension du circuit est désormais l'élément résistif reliant les bornes E1 et A. Dans le mode de réalisation de la figure 4, l'invention apporte alors déjà une amélioration par rapport au circuit classique de la figure 1, même pour un fonctionnement en régime établi, qui est d'éviter le recours à un potentiomètre haute tension (P, figure 1).

Une première solution pour réaliser un élément capacitif variable serait d'utiliser un condensateur variable. Toutefois, un tel composant est particulièrement onéreux surtout dans la mesure où il doit être bidirectionnel. De plus, l'utilisation d'un simple condensateur variable ne permettrait pas de résoudre un autre objectif de la présente invention qui est de limiter le courant d'appel lors des régimes transitoires d'allumage du circuit.

Une caractéristique de la présente invention est de prévoir, en parallèle sur le diac 4 ou analogue, un condensateur C1 en série avec un circuit constituant fonctionnellement une "source de tension" variable prenant une valeur fixée en régime établi. Cette caractéristique de l'invention est illustrée par la figure 5 qui représente le schéma équivalent d'un circuit de commande selon l'invention en régime établi. La représentation de la figure 5 est schématique et approximative en ce sens que la source 12, fixant en régime établi une tension V0 fonction de la puissance souhaitée pour la charge, est bidirectionnelle.

Cette "source de tension" est, selon l'invention, réalisée au moyen d'un condensateur C2 (figure 4) monté en parallèle avec, de préférence, un potentiomètre P' entre deux bornes 13, 14 de sortie redressée d'un pont de diodes D1, D2, D3 et D4 connecté en série avec le condensateur C1 (c'est-à-dire dont les deux bornes 15, 16 d'entrée alternative sont connectées entre le condensateur C1 et le noeud B).

Selon la présente invention, le condensateur C2 est de forte valeur par rapport au condensateur C1 pour, en régime établi, maintenir une tension sensiblement constante, au moins sur la durée d'une alternance. Ainsi, le condensateur C2 applique une tension de décalage vo au condensateur C1 qui est approximativement constante sur la durée d'une alternance de l'alimentation alternative. Le rôle des diodes D1, D2, D3, D4 est de rendre le fonctionnement bidirectionnel. Le rôle du potentiomètre P' de ce mode de réalisation est de modifier la valeur de la tension de décalage.

Grâce à l'emploi du condensateur C2, cette tension de décalage est rendue progressive, comme on le verra par la suite, lors des changements de puissance d'alimentation de la charge.

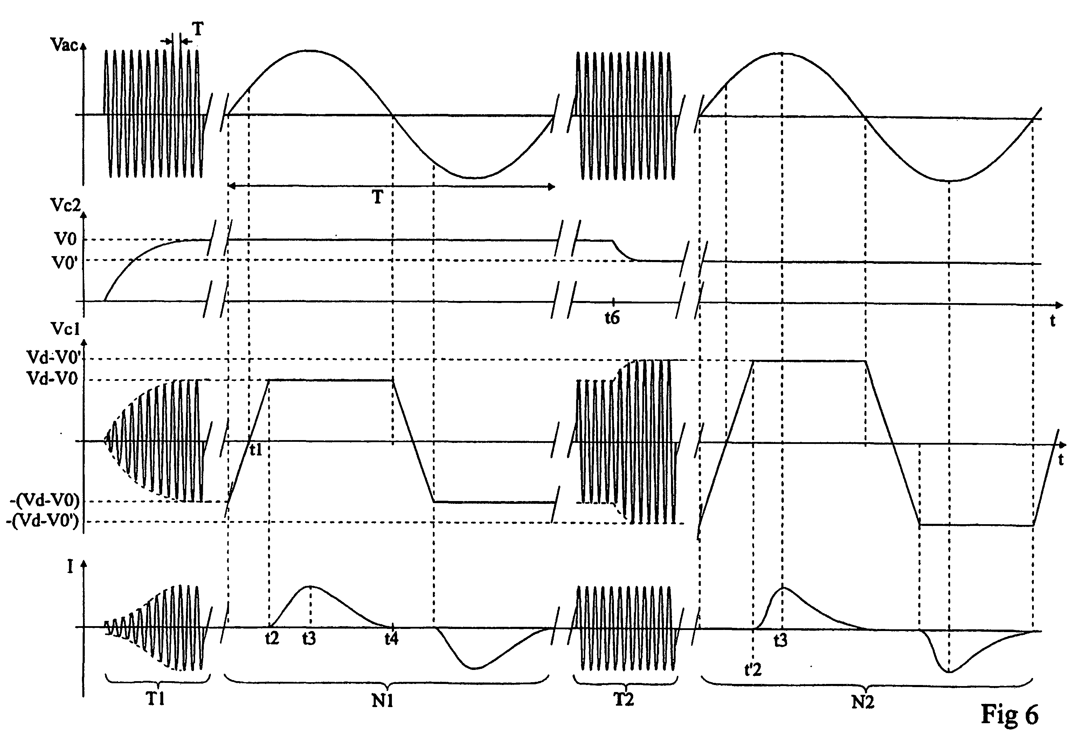

Le fonctionnement du circuit de l'invention sera décrit ci-après en relation avec la figure 6 qui illustre, sous forme de chronogrammes, un exemple d'allure des tensions Vac, $V_{C1}$ et $V_{C2}$ aux bornes des condensateurs C1 et C2, et du courant I prélevé sur l'alimentation alternative. Les chronogrammes de la figure 6 représente quatre phases successives de fonctionnement. Une première phase T1 correspond à une phase de démarrage ou de mise sous tension de la charge. Une deuxième phase N1 correspond à une première phase de régime établi pour une première puissance de fonctionnement de la charge. Une troisième phase T2 correspond à une phase transitoire de changement de régime de la charge, c'est-à-dire de modification de la puissance d'alimentation de la charge par modification de l'angle de phase de fermeture du triac 2. Une quatrième phase N2 correspond à un deuxième exemple de régime établi à l'issu du changement de puissance de la phase précédente. On notera que, dans les chronogrammes de la figure 6, l'échelle temporelle est différente dans les différentes phases. La référence correspond à la tension alternative Vac d'alimentation qui est elle de période T fixe.

Au démarrage (phase T1), la tension $V_{C2}$ étant initialement nulle, le temps nécessaire pour charger le condensateur C1 à la valeur Vd-$V_{C2}$, où Vd représente la tension seuil du diac 4, est grand. En fonction des valeurs de la résistance R, du potentiomètre P' et des condensateurs C1 et C2, il est possible que pendant les premières alternances du secteur, le condensateur C1 n'ait pas le temps d'atteindre le seuil nécessaire au déclenchement du diac 4, donc du triac 2. Le condensateur C2 se charge alors progressivement, ce qui a pour effet de diminuer progressivement le temps nécessaire pour que le condensateur C1 atteigne la tension seuil Vd-$V_{C2}$. Ainsi, pendant la phase de démarrage T1, la tension $V_{C2}$ augmente progressivement jusqu'à atteindre la valeur V0 choisie pour le régime établi. A l'inverse, l'angle de phase diminue progressivement jusqu'à atteindre l'angle de phase choisi pour le régime établi. Comme l'angle de phase est très grand au départ, il ne se produit pas de pic de courant à l'allumage, alors même que l'impédance de la charge est faible.

Le courant I croît progressivement sur plusieurs alternances jusqu'à atteindre le courant nominal. Par exemple, pour une lampe, cette croissance progressive permet de chauffer progressivement le filament.

En régime établi du condensateur C2 (phase N1 ou N2), c'est-à-dire lorsque la tension $V_{C2}$ est devenue constante, la valeur (V0 ou V0') de la tension $V_{C2}$ est fixée par la valeur du potentiomètre P'.

Quand la tension Vac est suffisante pour que les diodes du pont entrent en conduction en fonction de la tension accumulée par le condensateur C2, le condensateur C1 se charge (instant t1). Lorsque la tension $V_{C1}$ atteint, en valeur absolue, la tension seuil Vd du diac 4, diminuée de la tension V0 ou V0' pré-chargée dans le condensateur C2, le triac 2 entre en conduction (instant t2) et le courant I dans la charge 1 (donc prélevé sur le secteur) croît jusqu'au sommet de l'alternance (instant t3). Le courant I décroît avec l'alternance jusqu'à s'annuler au passage par zéro de l'alternance (instant t4), où le triac 2 se bloque par disparition du courant qui le traverse.

Le condensateur C1 reste chargé à la valeur Vd-V0 ou -(Vd-V0) jusqu'à l'alternance suivante, et le même fonctionnement se reproduit, le condensateur C1 se chargeant depuis la valeur Vd-V0 jusqu'à une valeur -(Vd-V0) ou inversement.

On notera que, à la différence du document US-A-4680536 où le condensateur du pont est préchargé pour charger le condensateur externe (C, figure 1) à la tension de retournement du diac, l'invention prévoit une charge en série des condensateurs C1 et C2 (le condensateur C1 étant chargé à travers le condensateur C2) à la tension de retournement du diac 4.

Comme l'illustre la figure 6 entre les phases N1 et N2, une modification de la valeur V0 en V0' conduit à une modification de la puissance dans la charge. Dans l'exemple représenté, on suppose que la valeur V0' est inférieure dans la phase N2 par rapport à la valeur V0 de la phase N1. Il en découle que le condensateur C1 est, à chaque alternance, préchargé à une valeur Vd-V0', -(Vd-V0') qui, en valeur absolue, est supérieure dans la phase N2 par rapport à son niveau de précharge dans la phase N1. Par conséquent, le condensateur C1 est plus long à atteindre le niveau nécessaire au retournement du diac 4, donc à la mise en conduction du triac (instant t'2). Il en découle que la période t3-t'2 séparant le sommet de l'alternance de la mise en conduction du triac est plus courte, donc la puissance délivrée est moindre.

Le réglage de la tension de décalage $V_{C2}$ (V0 ou V0'), donc de l'angle d'amorçage se fait par le potentiomètre P'. Lorsque la valeur de la résistance du potentiomètre P' diminue, la valeur de la tension $V_{C2}$ en régime établi diminue.

En régime établi, la relation entre l'angle d'amorçage d du triac 4 et les différents paramètres du circuit peut, en première approximation, s'exprimer par :

$$Cos(d) = 1 - 4\pi VdC1R/(4Rp'C1+T)VM,$$

où VM représente la tension crête de l'alimentation alternative Vac et où Rp' représente la résistance du potentiomètre P' (et de sa résistance talon éventuelle).

La relation ci-dessus montre que le réglage de l'angle de phase pourrait également se faire par la résistance R comme dans le cas classique de la figure 1. Par conséquent, selon un autre mode de réalisation de l'invention, l'élément résistif reliant les bornes E1 et A est un potentiomètre et le potentiomètre P' (figure 4) est remplacé par une résistance fixe. Le fonctionnement se déduit de celui exposé ci-dessus. Le potentiomètre est toutefois alors un potentiomètre haute tension alors que le potentiomètre P' du mode de réalisation préféré de la figure 4 ne voit qu'une basse tension, par exemple, inférieure à 50 volts. De plus, pour faire varier l'angle de phase d d'un facteur 10, il faut alors faire varier la valeur de la résistance R d'un facteur 10, ce qui a pour conséquence de faire varier le temps de démarrage dans des proportions plus importantes que dans le mode de réalisation de la figure 4, c'est-à-dire d'allonger la durée de la phase T1 nécessaire pour atteindre un régime établi. Ce dernier point peut cependant être préféré pour certaines applications.

On notera que la valeur du condensateur C2 n'intervient pas en première approximation, ce dernier conditionnant essentiellement la durée des phases transitoires.

Le changement de régime (puissance) est illustré par la phase T2 dans laquelle on suppose qu'à un instant t6, la valeur du potentiomètre P' est modifiée pour conduire à une modification de la valeur chargée dans le condensateur C2 depuis la valeur V0 vers une valeur inférieure V0'. Comme pour le démarrage (phase T1), le condensateur C2 met plusieurs alternances pour atteindre cette nouvelle valeur (V0'). Il en découle que ce changement de régime s'effectue sans pic de courant néfaste à la durée de vie de la charge.

Un avantage de la présente invention est qu'elle allie une bonne limitation de l'appel de courant au démarrage ou en changement de régime tout en permettant une variation de puissance de la charge au moyen d'une variation d'un élément résistif.

La limitation des pics de courants successifs en régime transitoire limite les perturbations du secteur et supprime le scintillement ou papillotement des autres charges éventuelles.

Un autre avantage de la présente invention est qu'elle ne nécessite aucune alimentation basse tension régulée comme dans le cas classique de la figure 3 pour alimenter un circuit intégré.

Un autre avantage de l'invention est qu'elle minimise le nombre de composants nécessaires. En particulier, elle ne requiert pas d'élément de limitation de tension dans la diagonale du pont, contrairement au document US-A-4680536. Cet avantage est lié, au fait que, selon l'invention, l'élément formant source de tension est en série avec l'élément résistif R et le condensateur C1 alors que, selon le document susmentionné, le pont est en parallèle avec le condensateur C (figure 1).

On notera que le potentiomètre P' (ou la résistance fixe le remplaçant) sert également à décharger le condensateur C2 pour permettre une réinitialisation rapide du circuit lorsque l'on coupe l'alimentation. Cette condition est nécessaire pour que le condensateur C2 puisse jouer son rôle amortisseur à l'allumage suivant.

La détermination des valeurs à donner aux différents composants de l'invention s'effectue en fonction de l'application, des caractéristiques de la charge et du fonctionnement souhaité.

On notera qu'une première constante de temps liée au démarrage du circuit est fixée essentiellement par les valeurs respectives de la résistance R et du condensateur C2. Cette constante de temps doit être la plus constante possible même si on fait varier l'angle de phase, c'est-à-dire la tension $V_{C2}$. Par conséquent, on cherche à ce qu'elle dépende peu de la valeur du potentiomètre P'. De préférence, on choisira une résistance R élevée pour limiter la dissipation du circuit. En effet, cette résistance R voit la haute tension du secteur.

La première constante de temps est fixée, en fonction de la charge, pour éviter les sur-courants néfastes. Dans certaines applications, par exemple la commande de lampe, on cherchera cependant à rendre les périodes transitoires le moins perceptible possible pour l'utilisateur, donc une constante de temps pas trop grande.

Une deuxième constante de temps, fixée essentiellement par les valeurs du potentiomètre P' et du condensateur C2, conditionne la durée d'extinction, c'est-à-dire de réinitialisation du circuit. De préférence, on cherche à rendre cette constante de temps la plus faible possible, pour que le circuit remplisse son rôle même en cas d'allumages successifs rapprochés.

On notera que le condensateur C1 doit être bidirectionnel. Toutefois, un condensateur basse tension suffit. De préférence, on choisira une valeur inférieure à 10 µF pour des raisons de coût et d'encombrement. On notera également que le condensateur C2, dont la valeur est plus importante (plusieurs centaines de µF), pourra être un condensateur chimique (unidirectionnel). De plus, la tension vue par les condensateurs C1 et C2 est individuellement inférieure à la tension de retournement du diac 4. En effet, c'est l'association en série C1+C2 qui est, selon l'invention, chargée à la tension de retournement du diac. En outre, par les valeurs des condensateurs C1 et C2 préférées, la tension crête aux bornes du condensateur C1 est supérieure à la tension aux bornes du condensateur C2 qui peut donc être de plus basse tension.

A titre d'exemple particulier de réalisation, un circuit tel qu'illustré par la figure 4 peut être réalisé en utilisant, pour les différents composants, les valeurs suivantes :

R = 15 kΩ ;
C1 = 2 µF ;
C2 = 300 µF ; et
P' = 25 kΩ variable, avec résistance talon de 820 Ω.

Avec de tels composants, on obtient, par exemple avec un moteur de type moteur d'aspirateur et pour une alimentation secteur de 220 volts/50 Hz, une durée de phase de démarrage T1 de l'ordre de 2 secondes, un comportement correct aux allumages et extinctions successives, et un réglage de puissance progressive en faisant varier l'angle de phase d de 2 ms à 10 ms.

Bien entendu, la présente invention est susceptible de diverses variantes et modifications qui apparaîtront à l'homme de l'art. En particulier, le dimensionnement des différents composants de l'invention est à la portée de l'homme du métier pourvu qu'il respecte les indications fonctionnelles données ci-dessus.

## Revendications

1. Circuit de commande d'une charge (1) propre à être alimentée en alternatif, du type comprenant un interrupteur (2) bidirectionnel et commandable par angle de phase, en série avec la charge entre deux bornes (E1, E2) d'application de l'alimentation alternative, **caractérisé en ce qu'**il comporte, en parallèle avec l'interrupteur, un premier élément résistif (R), un premier condensateur (C1) et un élément, en série avec ledit premier élément résistif et ledit premier condensateur, et fonctionnant, en régime établi, comme une source de tension constante (12), le point milieu (A) de l'association en série du premier élément résistif et du premier condensateur étant connecté, par l'intermédiaire d'un élément (4) à conduction bidirectionnelle déclenchée automatiquement quand la tension à ses bornes excède un seuil prédéterminé (Vd), à une borne (g) de commande de l'interrupteur.

2. Circuit de commande selon la revendication 1, **caractérisé en ce que** ledit élément (12), en série avec ledit premier élément résistif et ledit premier condensateur, est constitué d'un pont de redressement (D1, D2, D3, D4) dans la diagonale duquel sont associés, en parallèle, un deuxième condensateur (C2) et un deuxième élément résistif (P').

3. Circuit de commande selon la revendication 2, **caractérisé en ce que** la valeur du deuxième condensateur (C2) est grande devant la valeur du premier condensateur (C1).

4. Circuit de commande selon la revendication 2 ou 3, **caractérisé en ce que** le premier élément résistif est une résistance fixe (R), le deuxième élément résistif étant une résistance variable (P').

5. Circuit de commande selon la revendication 2 ou 3, **caractérisé en ce que** le premier élément résistif est une résistance variable, le deuxième élément résistif étant une résistance fixe.

6. Circuit de commande selon l'une quelconque des revendications 1 à 5, **caractérisé en ce que** ledit interrupteur bidirectionnel est un triac (2).

7. Circuit de commande selon l'une quelconque des revendications 1 à 6, **caractérisé en ce que** ledit élément à conduction bidirectionnelle déclenchée automatiquement est un diac (4).

## Patentansprüche

1. Steuerschaltung für eine Wechselstromlast (1) der Bauart mit einem Zweirichtungsschalter (2) steuerbar durch den Phasenwinkel und zwar in Serie mit der Last zwischen zwei Anschlüssen (E1, E2) für das Anlegen von der Wechselspannungsversorgung **dadurch gekennzeichnet, daß** Folgendes vorgesehen ist: Parallel zum Schalter ein erstes Widerstandselement (R), ein erster Kondensator (C1) und ein Element in Serie mit dem ersten Widerstandselement und dem ersten Kondensator und im Stetigzustand im Betrieb wie eine Konstantstromquelle (12) arbeitend, wobei der Mittelpunkt (A) der Serienschaltung des ersten Widerstandselements und des ersten Kondensators mit einem Steueranschluß (g) des Schalters verbunden ist, und zwar über ein Zweirichtungsleitungselement (4), welches automatisch eingeschaltet wird, wenn die daran anliegende Spannung eine vorbestimmte Schwelle (Vd) übersteigt.

2. Steuerschaltung nach Anspruch 1, **dadurch gekennzeichnet, daß** das Element (12) mit dem ersten Widerstandselement und dem ersten Kondensator eine Gleichrichterbrücke (D1, D2, D3, D4) aufweist, wobei in der Diagonalen der selben parallel ein zweiter Kondensator (C2) und ein Serienwiderstandselement (P') angeordnet bzw. in Assoziation vorgesehen ist.

3. Steuerschaltung nach Anspruch 2, **dadurch gekennzeichnet, daß** der Wert des zweiten Kondensators (C2) bezüglich des Wertes des ersten Kondensators (C1) groß ist.

4. Steuerschaltung nach Anspruch 2 oder 3, **dadurch gekennzeichnet, daß** das erste Widerstandselement ein fester Widerstand (R) ist, daß das zweite Widerstandselement ein fester Widerstand (P') ist.

5. Steuerschaltung nach Anspruch 2 oder 3, **dadurch gekennzeichnet, daß** das erste Widerstandselement ein variabler Widerstand ist und daß das zweite Widerstandselement ein fester Widerstand ist.

6. Steuerschaltung nach irgendeinem der Ansprüche 1 bis 5, **dadurch gekennzeichnet, daß** der Zweirichtungsschalter (bidirektionaler Schalter) ein Triac (2) ist.

**7.** Steuerschaltung nach irgendeinem der Ansprüche 1 bis 6, **dadurch gekennzeichnet, daß** das automatisch ausgelöste Zweirichtungsleitungselement (bidirektionales Leitungselement) ein Diac (4) ist.

**Claims**

**1.** A control circuit of an A.C. load (1), of the type including a bidirectional switch (2) controllable by phase angle, in series with the load between two terminals (E1, E2) of application of the A.C. supply, **characterized in that** it includes, in parallel with the switch, a first resistive element (R), a first capacitor (C1) and an element, in series with said first resistive element and said first capacitor, and operating, in steady state, like a constant current source (12), the midpoint (A) of the series connection of the first resistive element and of the first capacitor being connected, via a bidirectional conduction element (4) automatically turned on when the voltage thereacross exceeds a predetermined threshold (Vd), to a control terminal (g) of the switch.

**2.** The control circuit of claim 1, **characterized in that** the element (12), in series with said first resistive element and the first capacitor comprises a rectifying bridge (D1, D2, D3, D4) in the diagonal of which are associated, in parallel, a second capacitor (C2) and a second resistive element (P').

**3.** The second circuit of claim 2, **characterized in that** the value of the second capacitor (C2) is large with respect to the value of the second capacitor (C1).

**4.** The control circuit of claim 2 or 3, **characterized in that** said first resistive element is a fixed resistor (R), the second resistive element being a fixed resistor (P').

**5.** The control circuit of claim 2 or 3, **characterized in that** the first resistive element is a variable resistor, the second resistive element being a fixed resistor.

**6.** The control circuit of any of claims 1 to 5, **characterized in that** the bidirectional switch is a triac (2).

**7.** The control circuit of any of claims 1 to 6, **characterized in that** the automatically triggered bidirectional conduction element is a diac (4).

Fig 1

Fig 2

Fig 3

Fig 4

Fig 5

Fig 6